(19) Europäisches Patentamt
European Patent Office
Office européen des brevets

(11) Publication number: **0 116 989**
**A1**

(12) # EUROPEAN PATENT APPLICATION

(21) Application number: 84200136.4

(22) Date of filing: 02.02.84

(51) Int. Cl.³: C 02 F 1/52
C 01 B 25/238, C 22 B 3/00
C 22 B 60/02

(30) Priority: 05.02.83 NL 8300446

(43) Date of publication of application:
29.08.84 Bulletin 84/35

(84) Designated Contracting States:
AT BE DE FR GB IT NL SE

(71) Applicant: UNIE VAN KUNSTMESTFABRIEKEN B.V.
Maliebaan 81
NL-3581 CG Utrecht(NL)

(72) Inventor: Van Duijn, Simon
Pieter Bedijnstraat 6
NL-2202 VK Noordwijk(NL)

(72) Inventor: Durville, Paulus Franciscus Maria
Spreeuwenstraat 9
NL-2623 GV Delft(NL)

(72) Inventor: Van Rosmalen, Gerda Maria
Grabijnhof 1
NL-2625 LL Delft(NL)

(74) Representative: Roeffen, Wilhelmus Johannes
Maria et al,
OCTROOIBUREAU DSM Postbus 9
NL-6160 MA Geleen(NL)

(54) **Process for removing heavy metals from aqueous media.**

(57) Removing heavy metals, particularly cadmium, from acidic aqueous media by addition of an alkali or alkaline earth diphenyldithiocarbamate in an amount of 1-25 gram moles per gram atom heavy metals present, precipitation of the soluble organic heavy metal complex formed, and separation of the precipitate from the aqueous medium.

With this process the heavy metals can substantially be removed from even extremely acid, and possibly hot, aqueous media.

EP 0 116 989 A1

# PROCESS FOR REMOVING HEAVY METALS FROM AQUEOUS MEDIA

The invention relates to the removal of heavy metals, particularly cadmium, from acid, aqueous media by adding to these a dithiocarbamate and separating off the heavy metal compound formed.

Such a process is known for removing heavy metals from metallizing baths, see for instance Belgian patent specification 794.336. According to this known process, an ammonium, alkali or alkali earth metal salt of an N,N-dihydrocarbyldithio or diselenocarbamate is added to the liquor to be treated, in which process a precipitate of the corresponding heavy metal salts is formed, which is subsequently filtered off. As hydrocarbyl substituents, alkyl, aryl or aralkyl groups are generally mentioned.

A disadvantage of this known process is that the very toxic heavy metals, such as cadmium, lead, mercury and arsenic, are removed only partly. Another disadvantage is that in highly acid media the alkyl-substituted compounds preferred according to this known process will decompose, and that no precipitation of heavy metal compounds will occur when aryl- and aralkyl-substituted compounds are used.

The present invention now provides a process which makes it possible for these heavy metals to be substantially removed from even extremely acid, and possibly hot, aqueous media.

This is achieved according to the invention in that the dithiocarbamate used is a substituted or non-substituted, alkali metal- or alkaline earth metal diphenyldithiocarbamate in an amount of 1-25 gram moles dithiocarbamate per gram atom heavy metals present in the aqueous medium, the soluble organic heavy metal complex then formed is precipitated, and the precipitate is separated from the acid aqueous medium.

The dithiocarbamates to be used are known compounds, which can be prepared, for instance, on the basis of a diphenylamine and carbon disulphide, see 'Methoden der Organischen Chemie' by Houben-Weyl, 4th edition, volume IX (1955), pages 823-827.

In principle the dithiocarbamate can be used in both the $H^+$ form and as ammonium-, alkali- or alkaline earth metal salt.

As however in the said synthesis applied these compounds can be easily obtained as alkali metal salt, particularly sodium salt, advantageously an alkali metal-, particularly a sodium dithiocarbamate may be used. As it however appeared that the alkali metal salts are easily oxidized to the inactive disulphides so that an oxidation retarder often has to be added, preference is given to use the less oxidation-sensitive alkaline earth metal salts, particularly the calcium or barium salts.

In addition to diphenyldithiocarbamate, substituted diphenyldithiocarbamates can be used also according to the invention, for instance with one or more alkyl, amino, nitro, nitroso, carboxyl, hydroxyl, mercapto and/or sulphonic acid groups to the phenyl groups.

Preference is given to the use of N,N-diphenyldithiocarbamate, because this has been found to be very stable, to show a very high bonding capacity for heavy metals and to be capable of being synthesized in a fairly simple manner.

The quantity of dithiocarbamate to be added may vary, but depends, of course, on the quantity of heavy metals in the solution to be treated. The dithiocarbamate is generally used in a molar excess in respect of the heavy metals present (Cd, Pb, As, Cu, Ti, Hg, U, Y, rare earth metals). Preferably 2-6 gram moles dithiocarbamate is used per gram atom heavy metals present.

The organic heavy metal complex thus formed is precipitated according to the invention.

According to one mode of realization, these complexes are precipitated by adding to the liquor subjected to the treatment one or more organic metal complexes, which will result in a coprecipitate of heavy metal complex and the metal complex added. Examples of suitable metal complexes are diphenyldithiocarbamates of copper, titanium, zinc or vanadium. Optionally, these complexes may be formed in situ from the metals present in the liquor or added thereto and diphenyldithiocarbamate. Another possibility is after the separation, to return part of the cadmiumdiphenyldithiocarbamate formed.

Copperdiphenyldithiocarbamate has been found to be a particularly suitable coprecipitating agent. The quantity of coprecipitating agent may vary within wide limits, for instance 2 ppm or more calculated in respect of the liquor to be treated.

According to another mode of realization, the heavy metal complex is precipitated by adding an organic ligand to the liquor subjected to the treatment. Examples of suitable organic ligands are substituted or non-substituted diphenyldithiooxalates. Preference is given to using a polymeric dithiooxalate as organic ligand. It has been found that for this purpose particularly suitable are dithiooxalate polymers having the general formula:

$(-S-\overset{O}{\overset{\|}{C}}-\overset{O}{\overset{\|}{C}}-S-)_n$, where n represents a whole number higher than or equalling 3.

The quantity of organic ligand to be added is not critical. Generally 10 - 40 % (wt) calculated in respect of the quantity of diphenyldithiocarbamate is applied.

According to a third mode of realization the heavy metal complex is precipitated by converting it into the corresponding insoluble thiuramdisulphide complex. This conversion can be effected by adding an oxidizing agent, for instance potassiumpermanganate, to the liquor subjected to the treatment.

It has been found that, if the cadmium content of the liquor to be treated is very low, particularly $< 20$ ppm, a heavy metal complex precipitate can be obtained by adding the dithiocarbamate to the liquor in solid form. The solid dithiocarbamate can then be added in one or more, for instance in three, steps, preferably with separating off the precipitate after each step.

It has further been found that an even greater part of the cadmium present in the aqueous medium can be removed if an inorganic anion generating compound is added to this medium. Preferably said anion generating compound is added to the medium before the addition of the diphenyldithiocarbamate. Examples of suitable inorganic compounds are metalbromides and iodides, especially potassiumiodide or potassiumbromide, (alkali)metal sulphites, thiosulphates, or sulphamates.

The precipitate thus obtained can be separated from the liquor in various ways, for instance by decantatation, filtration, centrifugation. Preference is given to separate the precipitated metal complex off by means of a pressure filter.

The complex thus separated off can be carried off as such. However, it is possible also for the dithiocarbamates used to be recovered from this complex, for instance by treating the complex with a polar solvent, such as water, and an organic extractant such as toluene, xylene or benzene, after which the dithiocarbamate can be recovered, for instance by evaporation, from the organic phase formed.

The dithiocarbamate thus recovered can subsequently be used again as complexing agent for heavy metals.

The present invention can be used for removing heavy metals from various acid aqueous media, for instance from wet-process phosphoric acid, effluents from the hydrometallurgical industry, waste acids from the coal industry, waste acids from the pigment industry, particularly the titaniumdioxide industry, and harbour or purification sludge.

The invention will be further elucidated in the following examples without, however, being limited thereto.

Example I

3 ml of a 1 % (wt) solution of sodium diphenyldithiocarbamate in water was added, during stirring, to 20 ml phosphoric acid with a $P_2O_5$ content of 47 % (wt) containing 20 ppm cadmium. Through polarographic analysis it was found that practically all cadmium was complexed.

The liquor was subsequently filtered, Through extraction with toluene it was found that practically all cadmium was left behind in the filtrate.

Example II

The process of example I was repeated on the understanding that 5 ml of a phosphoric acid solution ($P_2O_5$ content of 47 % (wt)) containing 120 ppm metals (Hg, Cu, Zn, Ni and Fe) was added to the solution to be treated and that 6 ml of the dithiocarbamate solution was dosed.

After filtration and extraction with toluene it was found that more than 70 % (wt) of the total cadmium was filtered off.

Example III

The process of example I was repeated on the understanding that 2 ml of a 1 % (wt) aqueous solution of a dithio-oxalate was added also.

The dithio-oxalate applied was a polymer having the formula

$(-S-\overset{O}{\overset{\|}{C}}-\overset{O}{\overset{\|}{C}}-S-)_n$, where n was higher than 3.

After filtration and extraction with toluene it was found that about 70 % of the cadmium had been caught.

Example IV

The process according to example I was repeated on the understanding that 20 milligrammes potassium permanganate was dosed to the solution was well. The solution showed a discolouration from light brown, via blue and dark green, to deep brown. Using infrared spectroscopy, it could be shown that the diphenyldithiocarbamate had been converted into diphenylthiuramdisulphide.

After filtration and extraction with toluene, it was found that more than 70 % of the cadmium had been caught.

Example V

A quantity of 60 mg solid sodium p-methyl-diphenyldithiocarbamate was added with stirring to 50 ml phosphoric acid with a $P_2O_5$ content of 47 % (wt) containing about 60 ppm Cd. In order to prevent oxidation of the dithiocarbamate, 1 ml of 1 % (wt) aqueous solution of oxalic acid was added as well. After ½ hour the liquor was filtered and the filter cake was extracted with toluene.

On analysis it was found that 65 % of the cadmium was caught.

Example VI

The process of example V was repeated, on the understanding that 60 mg solid calcium diphenyl dithiocarbamate was added and that no oxalic acid was added. The quantity of cadmium caught was now 70 %.

Example VII

The process of example VI was repeated using solid barium diphenyldithiocarbamate. The quantity of cadmium caught was now 68 %.

Example VIII

The process of example VI was repeated. on the understanding that the cadmium content of the phosphoric acid was 10 ppm. The quantity of cadmium caught was now 67 %.

Example IX

A quantity of 60 mg solid sodium diphenyldithiocarbamate was added, during stirring, to 50 ml phosphoric acid with a $P_2O_5$ content of 45 % (wt) containing, in addition to small quantities of Ni, Cu, Cr, Ti, Zn and Fe, about 13 ppm Cd. The addition was effected in three steps of 20 mg, the liquor being filtered after each step, upon which the total content of cadmium filtered off was determined. After the first step it was 86 % and after the second and third steps 100 %.

CLAIMS

1. Process for removing heavy metals, particularly cadmium, from acid, aqueous media by adding to these a dithiocarbamate and separating off the heavy metal compound formed, characterized in that a substituted or non-substituted, alkali metal- or alkaline earth metal diphenyldithiocarbamate is added in an amount of 1-25 gram moles dithiocarbamate per gram atom heavy metals present in the aqueous medium, the soluble organic heavy metal complex then formed is precipitated, and the precipitate is separated from the aqueous medium.

2. Process according to claim 1, characterized in that the heavy metal complex formed is precipitated by coprecipitation with a metal diphenyldithiocarbamate.

3. Process according to claim 1, characterized in that the heavy metal complex is precipitated by adding a polymeric dithiooxalate having the general formula:

$(-S-\overset{\overset{O}{\parallel}}{C}-\overset{\overset{O}{\parallel}}{C}-S-)_n$, where n represents a whole number higher than or equalling 3.

4. Process according to claim 1, characterized in that the heavy metal complex is precipitated by converting it into an insoluble thiuramdisulphide complex by treatment with an oxidizing agent.

5. Process according to any one of claims 1-4, characterized in that the dithiocarbamate is added in solid form.

6. Process according to claim 5, characterized in that the solid dithiocarbamate is added in a plurality of steps.

7. Process according to any one of claims 1-6, characterized in that an inorganic anion generating compound is added to the aqueous medium before addition of the diphenyldithiocarbamate.

8. Process according to any one of claims 1-7, characterized in that the precipitated heavy metal complex is separated off by means of a pressure filter.

9. Process according to any one of claims 1-8, characterized in that the heavy metal complex separated off is treated with a polar solvent and an organic extractant and the diphenyldithiocarbamate is recovered from the organic phase formed.

European Patent Office

# EUROPEAN SEARCH REPORT

0116989
Application number

EP 84 20 0136

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-2 899 451 (O.K. NEVILLE)<br>* Claims; columns 3,4 * | 1,2,5,6,8,9 | C 02 F 1/52<br>C 01 B 25/238<br>C 22 B 3/00<br>C 22 B 60/02 |
| X | CHEMICAL ABSTRACTS, vol. 99, 1983, page 665, no. 98387y, Columbus, Ohio, USA<br>L. PRZYBOROWSKI et al.: "Potentiometric titration of some metal ions using diphenyldithiocarbamate" & MAT.-FIZ.-CHEM. 1981, 23(1), 59-63 * Abstract * | 1,2,5,6,8,9 | |
| X | DE-B-1 039 238 (LICENTIA)<br>* Claims * | 1 | |
| A | US-A-3 769 205 (R.P. WILLIAMS) | | TECHNICAL FIELDS SEARCHED (Int. Cl. 3) |
| A | FR-A-2 156 895 (TOMS RIVER CHEMICAL CORP.) | | C 02 F<br>C 01 B<br>C 22 B |
| A | FR-A-2 190 494 (SUMITOMO CHEMICAL CO., LTD.) | | |
| A | FR-A-2 215 393 (NIPPON SODA CO., LTD.) | | |
| | --- -/- | | |

The present search report has been drawn up for all claims

| Place of search | Date of completion of the search | Examiner |
|---|---|---|
| THE HAGUE | 07-05-1984 | JACOBS J.J.E.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

0116989

Application number

EP 84 20 0136

Page 2

| Category | DOCUMENTS CONSIDERED TO BE RELEVANT<br>Citation of document with indication, where appropriate, of relevant passages | Relevant to claim | CLASSIFICATION OF THE APPLICATION (Int. Cl. ³) |
|---|---|---|---|
| A | CHEMICAL ABSTRACTS, vol. 83, 1975, page 349, no. 102951s, Columbus, Ohio, USA & JP - A - 75 49164 (NIHON GIJUTSU KAIHATSU K.K.) 01-05-1975 * Abstract * | | |
| | --- | | |
| A | CHEMICAL ABSTRACTS, vol. 81, 1974, page 343, no. 82924p, Columbus, Ohio, USA T. YAMANE et al.: "Solvent extraction of lead, silver, antimony, and thallium with zinc dibenzyldithiocarbamate and its application to the separation of bismuth from large amounts of lead" & ANAL. CHIM. ACTA 1974, 69(2), 347-353 * Abstract * | | |
| | --- | | TECHNICAL FIELDS SEARCHED (Int. Cl. ³) |
| A,D | FR-A-2 177 468 (SOCIETE CONTINENTALE PARKER) | | |
| | ----- | | |

The present search report has been drawn up for all claims

| Place of search | Date of completion of the search | Examiner |
|---|---|---|
| THE HAGUE | 07-05-1984 | JACOBS J.J.E.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82